(19) Europäisches Patentamt / European Patent Office / Office européen des brevets

(11) **EP 3 889 663 B1**

(12) **EUROPEAN PATENT SPECIFICATION**

(45) Date of publication and mention
of the grant of the patent:
**15.07.2026 Bulletin 2026/29**

(51) International Patent Classification (IPC):
**G02B 21/00** (2006.01)    **G02B 21/08** (2006.01)

(52) Cooperative Patent Classification (CPC):
**G02B 21/082; G02B 21/0032**

(21) Application number: **21167002.1**

(22) Date of filing: **06.04.2021**

(54) **OPTICAL ILLUMINATION SYSTEM FOR A MICROSCOPE OR A SPECTROSCOPIC DEVICE**

OPTISCHES BELEUCHTUNGSSYSTEM FÜR EIN MIKROSKOP ODER EINE SPEKTROSKOPISCHE VORRICHTUNG

SYSTÈME D'ÉCLAIRAGE OPTIQUE POUR UN MICROSCOPE OU UN DISPOSITIF SPECTROSCOPIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2020 EP 20168037**

(43) Date of publication of application:
**06.10.2021 Bulletin 2021/40**

(73) Proprietor: **Leica Microsystems CMS GmbH**
**35578 Wetzlar (DE)**

(72) Inventor: **Gugel, Hilmar**
**69221 Dossenheim (DE)**

(74) Representative: **Schaumburg und Partner**
**Patentanwälte mbB**
**Mauerkircherstraße 31**
**81679 München (DE)**

(56) References cited:
**EP-A2- 1 126 302      EP-A2- 2 720 074**
**KR-A- 20090 118 774    US-A1- 2006 187 499**
**US-A1- 2014 162 268    US-A1- 2019 331 904**
**US-A9- 2018 356 620    US-B2- 8 665 517**

- **YANG BO ET AL: "Evaluation of Mode Field Diameter of Step-Index Fibers and Comparison Analysis", RESEARCH JOURNAL OF APPLIED SCIENCES, vol. 6, no. 3, 15 June 2013 (2013-06-15), pages 382 - 386, XP093262410, ISSN: 2040-7459, Retrieved from the Internet <URL:https://maxwellsci.com/print/rjaset/ v6-382-386.pdf> DOI: 10.19026/rjaset.6.4090**

**Description**

Technical field

The invention relates to a microscope including an optical illumination system.

Background

In microscopes, in particular laser scanning microscopes, laser light is used for illumination and/or manipulation of a specimen. The laser light is created by a laser light source and coupled into the microscope by means of an optical fiber. In order to illuminate and/or manipulate the specimen with the laser light, an illumination light beam is formed at a fiber end of the optical fiber. The illumination light beam is then directed into an entrance pupil of an objective of the microscope and directed onto or into the specimen by means of the objective.

It is essential to have a uniform illumination of the entrance pupil by the illumination light beam in order to optimally use the laser light having multiple discrete wavelengths or a continuous spectrum of wavelenghts. If the illumination is not uniform it might be necessary to overilluminate the entrance pupil at certain wavelengths which might require an expensive high powered laser light source in some cases. In order to achieve uniform illumination, the illumination light beam needs to have a certain beam diameter at the entrance pupil. This beam diameter is essentially dependent on the mode field diameter of the optical fiber which determines the beam diameter at the fiber end. However, the mode field diameter often depends on the wavelength of the laser light used. This means that if e.g. a supercontinuum laser, a white light laser, or more than one laser light source with different wavelengths is used, uniform illumination of the entrance pupil cannot be guaranteed for all wavelengths.

However, in some applications, e.g. fluorescence correlation spectroscopy, it is advantageous to keep a resolution or a focus volume independent of the wavelength of the illumination light. This requires a controlled overillumination or underillumination of the entrance pupil, respectively.

Document KR 2009 0118774 A discloses a microscope comprising an optical illumination system with an optical fiber emitting illumination light towards a sample. The optical fiber is configured as a multimode fiber which couples the illumination light into a collimator from which the illumination light is emitted into an objective lens facing the sample.

Document EP 1 126 302 A2 discloses a device that comprises a fiber array including a plurality of single mode fibers. The light beams emitted by the optical fibers are made incident upon a collimator array device by which the light beams are collimated. The collimated light beams are converged onto a receiving side fiber array.

Document EP 2 720 074 A2 discloses different examples of a multiplexed confocal microscope system. The multiplexed confocal microscope system comprises a fiber for generation illumination light.

Summary

It is an objective to provide a microscope comprising an optical illumination system allowing for an optimized illumination of an entrance pupil of an objective through which a specimen is illuminated.

The aforementioned object is achieved by the subject-matter according to the independent claim. Advantageous embodiments are defined in the dependent claims and the following description.

An optical illumination system for a microscope comprises a light source configured to generate illumination light with at least two different wavelengths, an optical fiber coupled to the light source and configured to form an illumination light beam that is emitted from a fiber end thereof, an objective having an entrance pupil which is configured to be illuminated with the illumination light beam for creating a focus volume illuminating a specimen, and an optical focusing system arranged between the fiber end and the objective and configured to illuminate the entrance pupil of the objective while forming a predetermined number of successive beam waists of the illumination light beam along a propagation direction thereof. The last beam waist along the propagation direction determines the illumination of the entrance pupil of the objective. An increase of a mode field diameter of the optical fiber with an increase from the shortest wavelength to the longest wavelength of the illumination light beam is less than 0.03 %/nm and the predetermined number of beam waists is an even number.

For practical implementation, an intensity distribution of the illumination light beam emitted from the optical fiber can be considered, to a good approximation, as a normal or Gaussian intensity distribution as long as the cross section of the illumination light beam is not reduced by aperture elements or limited lens openings. This is approximately true even for e.g. a photonic crystal fiber where a Gaussian intensity distribution forms only at a distance from the fiber end. Consequently, each of the plurality of beam waists which is formed from the illumination light beam along the light propagation direction by means of the optical focusing system can also be approximately regarded as a Gaussian intensity distribution. Within the optical focusing system, this applies both to planes that truly represent image planes and planes that only represent Fourier planes, i.e. planes which are not image planes in a strict sense. Therefore, in the present context, the terms "beam waist" on the one hand and the terms "optical image" and "intermediate optical image" on the other hand are used interchangeably. In other words, due to fact that each beam waist can be approximated by a Gaussian intensity distribution anyway, the following description does not differentiate between a beam waist which actually represents an optical image of the fiber end (or more generally an optical image of a first beam waist preceding the optical focusing system in light propagation direction) and a beam waist which represents a Fourier transform of the fiber end (or a Fourier transform of the afore-mentioned preceding first beam waist). For the same reason, the optical focusing system may also be referred to as an optical imaging system hereinafter.

Against this background, the optical focusing system may also be referred to as an optical intermediate imaging system which is configured to form an optical image of the fiber end preferably in the entrance pupil of the objective and to form a predetermined number of intermediate optical images between the fiber end and the entrance pupil, wherein the optical image of the fiber end formed in the entrance pupil represents the last of the afore-mentioned number of intermediate images along the light propagation direction.

Further, in a broader sense, a beam waist is to be understood as a measure for a beam portion in which the cross section of the illumination beam is minimized or at least reduced to a large extent. Such a beam portion may exhibit a large axial extension along the light propagation direction which means that the minimum of the beam cross section is rather flat. In this case, it may well be that the exact minimum of the beam cross section can be shifted along the light propagation direction without significantly changing the beam cross section at a specific axial position provided that this position is still in the range of a flat minimum, especially within a distance of two times the Rayleigh length from the flat minimum, more preferably within the distance of one Rayleigh length from the flat minimum. The Rayleigh length designates the distance along the light propagation direction from the beam waist to a position where the beam diameter increases by a factor $\sqrt{2}$.

Such a configuration may be envisaged in particular with regard to the last beam waist along the light propagation direction, i.e. the beam waist which determines the illumination of the entrance pupil of the objective. Thus, it may be sufficient that the optical focusing system forms the last beam waist without precisely locating the same at the axial position of the entrance pupil as long as the entrance pupil is illuminated in the desired manner. For instance, the precise minimum of the beam cross section representing the last beam waist may be formed along the light propagation direction in front or even behind the entrance pupil. When being formed behind the axial position where the entrance pupil of the objective is located, the last beam waist may be considered as a virtual beam waist. This means that the last beam waist would only appear when considering the beam shaping effect exerted by the optical focusing system isolated from the objective, i.e. when disregarding the effect of the objective on beam shaping.

An increase of a mode field diameter of the optical fiber with an increase from the shortest wavelength to the longest wavelength of the illumination light beam is less than 0.03 %/nm, and the predetermined number of beams waists or intermediate optical images is an even number. Alternatively, not according to the claimed invention, an increase of the mode field diameter of the optical fiber with an increasing from the shortest wavelength to the longest wavelength of the illumination light beam is greater than or equal to 0.03 %/nm, and the predetermined number of beams waists or intermediate optical images is an odd number.

If the shortest wavelength is denoted by $\lambda_0$, the longest wavelength is denoted by $\lambda_1$, the mode field diameter at the wavelength $\lambda_0$ is denoted by $MFD_0$, and the modified mode field diameter at the wavelength $\lambda_1$ is denoted by $MFD_1$, the increase value K may be determined by following relationship:

$$K = \frac{MFD_1 - MFD_0}{(\lambda_1 - \lambda_0) \cdot MFD_0}$$

Thus, the increase value K is related to a reference wavelength given by $\lambda_0$ and a reference mode field diameter given by $MFD_0$. Therefore, the increase value may be considered as defining an average increase over a wavelength range from $\lambda_0$ to $\lambda_1$. In order to illustrate the afore-mentioned wavelength dependency of the mode field diameter (MFD), an example may be considered for a K-value of 0.25 %/nm in which the lowest wavelength is assumed to be 400 nm and the longest wavelength is assumed to be 600 nm. Accordingly, the MFD increases by 50 % from 400 nm to 600 nm. Further assumed that the MFD is 4.00 μm at 400 nm, the MFD increases to 6.00 μm at 600 nm.

Preferably, the microscope is a laser scanning microscope. In this application, the mode field diameter may be regarded to be essentially, i.e. at least approximately independent of the wavelength if the increase of the mode field diameter of the optical fiber with an increasing wavelength of the illumination light beam is less than 0.03 %/nm and the predetermined number of beam waists formed by the optical focusing system is an even number.

The optical illumination system directs the illumination light beam into the entrance pupil of the objective of the microscope. For this purpose, a beam waist of the illumination beam (which may be referred as the image of the fiber end as explained above) is preferably formed in the entrance pupil while forming the predetermined number of beams waists (which may be referred to as the intermediate optical images as explained above). In both alternatives, the beam diameter of the illumination light beam at the entrance pupil of the objective is essentially, i.e. approximately independent of the wavelength of the laser light used. Thus, a uniform illumination of the entrance pupil of the objective of the microscope is guaranteed to be independent of the wavelength.

The beam diameter of the illumination light beam at the entrance pupil of the objective is approximately proportional to the mode field diameter of the optical fiber and independent of the wavelength, if the predetermined number of beams waists is an even number. Thus, since the mode field diameter of the optical fiber is to a large extent independent of the wavelength, the beam diameter of the illumination light beam at the entrance pupil of the objective is independent of the wavelength to a large extent as well, i.e. less than 0.03 %/nm.

If the predetermined number of beam waists is an odd number, the beam diameter of the illumination light beam at the entrance pupil of the objective is inversely proportional to the mode field diameter of the optical fiber and proportional to the wavelength. In this case, the wavelength dependency of the mode field diameter and the wavelength dependency of the beam diameter counteract each other, and the beam diameter of the illumination light beam at the entrance pupil of the objective is essentially independent of the wavelength. In the present context, the terms "essentially independent", "approximately independent" and "proportional" are to be understood in a broad sense. Specifically, these terms shall not restrict the solution disclosed herein to a case where strict independence of the beam diameter from the wavelength is achieved at the entrance pupil. Rather, it may be sufficient to compensate for a wavelength-dependent MFD change to some extent by an opposite wavelength dependence the beam diameter at the location of the entrance pupil.

The uniform illumination achieved by both alternatives allows the use of a low powered illumination light source in combination with the optical illumination system. Low powered illumination light sources are typically cheaper than high power illumination light sources.

In a preferred embodiment, the optical focusing system is configured to form the last beam waist of the illumination light beam in the entrance pupil of the objective. When the last beam waist is precisely located in the entrance pupil, the latter can be optimally illuminated depending on the specific application.

The at least two different wavelengths of the illumination light may be in a range from 350 nm to 1700 nm. Different sub-ranges are possible, for instance wavelength ranges for visible light as from 400 nm to 850 nm, and from 440 nm to 800 nm. Further, a range including near infrared light from 650 nm to 1700 nm or from 650 nm to 1300 nm is conceivable. The light source may be configured to emit multiple discrete wavelengths or one or more continuous wavelength bands. The light source may also comprise a beam combiner element configured to combine two or more laser light beams of different wavelengths. Further, the light source may be formed from one or more laser sources, for instance a supercontinuum laser source.

In a preferred embodiment, the optical focusing system comprises a first lens arranged at a distance from the fiber end, said distance being equal to a focal length of the first lens. In this embodiment the fiber end is located in the front focal point of the lens. Therefore, the fiber end may be imaged into the entrance pupil, thus allowing a uniform illumination of the entrance pupil with the illumination light beam formed at the fiber end.

In another preferred embodiment, the optical focusing system comprises a first lens arranged at a distance from a first beam waist of the illumination light beam, said distance being equal to a focal length of the first lens, wherein the first beam waist precedes the predetermined number of successive beam waists formed by the optical focusing system along the propagation direction of the illumination light beam. In this embodiment, the position of the first beam waist may or may not coincide with the position of the fiber end. In thin lens approximation, the radius $w_0'$ of a second beam waist of the illumination light beam immediately following the first lens can be expressed in terms of the radius $w_0$ of the first beam waist, the focal length $f_1$ of the first lens and the wavelength $\lambda$ of the illumination light as

$$w_0' = \frac{f_1 \times \lambda}{\pi \times w_o}.$$

In this embodiment, the radius of the second beam waist can be precisely determined. Thus, the illumination of the entrance pupil can be precisely controlled.

In another preferred embodiment, the optical focusing system comprises at least two lenses, one of which being the first lens. One of the at least two lenses immediately following a preceding lens of the at least two lenses along the propagation direction of the illumination light beam is arranged at a distance from the preceding lens, said distance being equal to the sum of a focal length of the preceding lens and a focal length of the following lens. In thin lens approximation, the radius $w_0''$ of the beam waist of the illumination light beam after the lens immediately following the first lens can be expressed in terms of the radius $w_0'$ of the beam waist of the illumination light beam after the first lens and the focal length $f_2$ of the lens immediately following the first lens as

$$w_0'' = \frac{f_2 \times \lambda}{\pi \times w_o'} = \frac{f_2}{f_1} \times w_o.$$

In this embodiment, the radius of the beam waist after any lens can be precisely determined. Thus, the illumination of the entrance pupil can be precisely controlled independent of the wavelength of the illumination beam.

In another preferred embodiment, a lens of the optical focusing system immediately preceding the entrance pupil of the objective of the microscope is arranged at a distance from the entrance pupil, said distance being equal to a focal length of the preceding lens. In this preferred embodiment, the wavefront radius of the illumination light beam at the entrance pupil of the objective is infinite. In other words, the rays forming the illumination light beam are parallel at the entrance pupil of the objective. Most objectives, in particular infinity corrected objectives, are designed such that their imaging properties are best for such parallel rays, e.g. parallel rays experience the least aberrations. Thus, this preferred embodiment allows to optimally use the objective of the microscope, e.g. for illuminating a specimen.

It is to be noted that, in the present application, each of the above-mentioned lenses is not to be restrictively understood as referring only to a single lens element. Rather, in the present context, a lens may also refer to a lens unit comprising more than one lens element.

In another preferred embodiment, the optical focusing system comprises a scanning element configured to scan the specimen with the illumination light beam. In this preferred embodiment, the angle of the illumination light beam in the entrance pupil can be adjusted. Since this angle determines the position onto which the objective directs the illumination light beam, different positions of the specimen may be illuminated without moving the specimen, which might disturb it.

In another preferred embodiment, the scanning element is arranged at the position of one of the predetermined number of beam waists of the illumination light beam formed by the optical focusing system. Preferably, the scanning element is arranged at a plane conjugated to the plane of the objective pupil. In case a single mirror forms the scanning element, the center of its tilting movement, i.e. its pivot point is arranged at the plane conjugated to the plane of the objective pupil. The plane conjugated to the plane of the objective pupil is typically the back focal plane of the objective and is typically equal to the primary telecentric plane and also the entrance aperture of the objective. Therefore, in this embodiment an image of the scan element is formed in the pupil of the microscope objective. In this preferred embodiment, a so called descanned arrangement can be realized. That is an arrangement in which a light beam returning from the objective, e.g. fluorescence light emitted by the specimen, is directed by the scanning element into the direction from which the illumination light beam is irradiated towards the sample. Such descanned arrangements are used e.g. confocal microscopes.

The optical fiber may be a photonic crystal fiber or a hollow core photonic crystal fiber. The increase of the mode field diameter of photonic crystal fibers with an increasing wavelength is less than 0.03%/nm, often less than 0.02%/nm and in some cases even less than 0.01%/nm. These values of 0.03%/nm, 0.02%/nm, and 0.01%/nm may be considered as absolute values. Thus, in case of a negative increase of the mode field diameter, the absolute values do not exceed 0.03%/nm, 0.02%/nm, and 0.01%/nm, respectively. Thus, the mode field diameter of these optical fiber is regarded as essentially wavelength-independent in the context of this application.

The invention further relates to a microscope comprising the optical illumination system described above, wherein the objective is configured to direct the illumination light beam onto a specimen and to receive detection light from the specimen, and an optical detection system having a detector configured to receive the detection light.

In particular, the microscope comprises a processor configured to compute an auto correlation function of the detection detected by the detector. In this embodiment, the microscope may be used for fluorescence correlation spectroscopy.

In a preferred embodiment, the microscope comprises a main beam splitter configured to separate the illumination light beam and the detection light. In particular, the beam splitter is configured to direct the illumination light beam towards the entrance pupil and to direct the detection light onto the detector. In this embodiment, the illumination light and the detection light share a common light path. Thus, the microscope according to this embodiment can be made very compact.

In another preferred embodiment, the microscope comprises a single objective facing the specimen. In this embodiment, the objective used to direct the illumination light beam onto or into the specimen may also be used for receiving the detection light thereby saving space in a sample space of the microscope. Further, if a cover slip is used to cover the specimen, the use of a single objective allows both the illumination light beam and the detection light to pass the coverslip perpendicular. This greatly reduces loss of light due to reflection and thus enhances the image quality of the microscope.

This is due to the fact that the beam diameter of the illumination light beam at the entrance pupil increases with the wavelength. Overilluminating or underilluminating the entrance pupil changes the effective numerical aperture NA of the objective and thereby its lateral and axial resolution. The lateral resolution $\Delta r$ of the objective can be approximated in terms of the wavelength-dependent numerical aperture NA and the wavelength $\lambda$ as

$$\Delta r \approx 0.61 \frac{\lambda}{NA}$$

Since the effective numerical aperture NA varies in good approximation proportionally with the wavelength $\lambda$, the lateral resolution $\Delta r$ of the objective is approximately independent of wavelength $\lambda$.

The axial resolution $r_z$ can be approximated in terms of the refractive index n of the specimen as

$$r_z = \frac{2 \times n \times \lambda}{NA^2}.$$

Thus, the wavelength dependence of the axial resolution $r_z$ is reduced likewise. Accordingly, both the lateral resolution $\Delta r$ and the axial resolution $r_z$ are essentially independent of the wavelength $\lambda$ or at least to a minor extent dependent on the wavelength. As a result, the focus volume, which is proportional to the product of the lateral resolutions $\Delta r$ in both lateral directions and the axial resolution $r_z$, is also essentially independent of the wavelength $\lambda$ or at least to a minor extent dependent on the wavelength which is advantageous specifically for fluorescence correlation spectroscopy.

The claimed optical illumination system for the spectroscopic device can be supplemented using the features of the dependent claims directed to the optical illumination system for a microscope described above.

The invention further relates to a microscope comprising the optical illumination system described above, wherein the objective is configured to direct the illumination light beam onto a specimen and to receive detection light from the specimen, and an optical detection system having a detector configured to receive the detection light.

In particular, the microscope comprises a processor configured to compute an auto correlation function of the detection detected by the detector. In this embodiment, the microscope may be used for fluorescence correlation spectroscopy.

In a preferred embodiment, the microscope comprises a main beam splitter configured to separate the illumination light beam and the detection light. In particular, the beam splitter is configured to direct the illumination light beam towards the entrance pupil and to direct the detection light onto the detector. In this embodiment, the illumination light and the detection light share a common light path. Thus, the microscope according to this embodiment can be made very compact.

In another preferred embodiment, the microscope comprises a single objective facing the specimen. In this embodiment, the objective used to direct the illumination light beam onto or into the specimen may also be used for receiving the detection light thereby saving space in a sample space of the microscope. Further, if a cover slip is used to cover the specimen, the use of a single objective allows both the illumination light beam and the detection light to pass the coverslip perpendicular. This greatly reduces loss of light due to reflection and thus enhances the image quality of the microscope.

In another preferred embodiment, the microscope is a confocal microscope. In particular, the microscope comprises a pinhole aperture arranged in front of the detector. Confocal microscopes have high optical resolution and contrast.

Short Description of the Figures

Hereinafter, specific embodiments are described referring to the drawings, wherein:

Figure 1 is a schematic drawing of a microscope according to an embodiment;
Figure 2 is a schematic diagram of a part of an optical focusing system of the microscope according to Figure 1; and
Figure 3 is a schematic drawing of a microscope that is not according to the claimed invention.

Detailed description

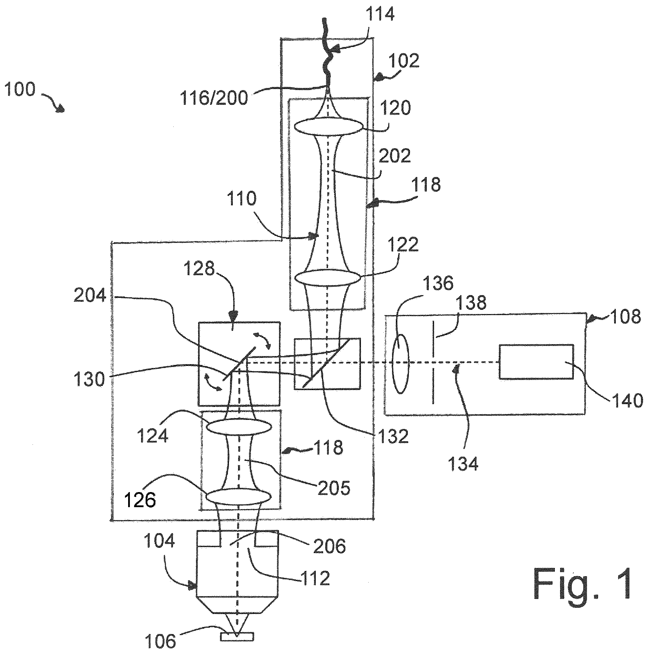

Figure 1 is a schematic drawing of a microscope 100 according to an embodiment. The microscope 100 comprises an optical illumination system 102 with an objective 104 facing a specimen 106, and a detection system 108. The optical illumination system 102 comprises a light source (not shown in Figure 1) which configured to generate illumination light of different wavelengths.

The optical illumination system 102 is configured to direct an illumination light beam 110 into an entrance pupil 112 of the objective 104. The optical illumination system 102 comprises an optical fiber 114 configured to form the illumination light beam 110 that is emitted from a fiber end 116 thereof. The optical fiber 114 is exemplarily implemented as a photonic crystal fiber having a mode field diameter which increases by less than 0.03 %/nm as the wavelength of the illumination light increases. The intensity distribution of the illumination light beam 110 can be approximated by a normal or Gaussian distribution. The mode field diameter is then defined by the diameter of the illumination light beam 110 at which its intensity (power density) is reduced to $\frac{1}{e^2}$ of the maximum intensity, i.e. the intensity at the beam center of the illumination light beam 110.

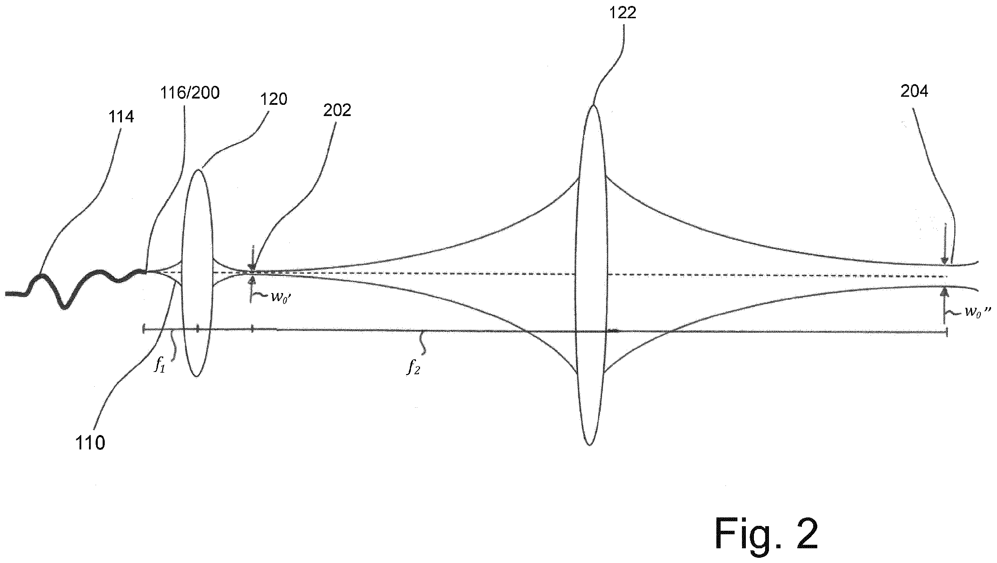

The optical illumination system 102 comprises an optical focusing system (optical intermediate imaging system) 118. The optical focusing system 118 comprising a first lens 120 arranged immediately following the fiber end 116 at a distance from a first beam waist 200 (see also Figure 2) of the illumination light beam 110, said distance being equal to a focal length of the first lens 120. In the present embodiment, the first beam waist 200 is formed at the fiber end 116. Alternatively, the fiber end 116 may be configured such as to form the first beam waist 200 at any position between the first lens 120 and the fiber end 116 or even within the optical fiber 114 as may be the case when using e.g. a photonic crystal fiber. It is further to be noted that according to the embodiment shown in Figure 1, the first beam waist 200 does not necessarily form a waist of the illumination beam 110 in a strict sense assumed that a waist would strictly be understood as axially diverging to both sides from a minimum of the beam cross section. For the sake of simplicity, the beam portion 200 will nevertheless be referred to as beam waist hereinafter.

The optical focusing system 118 further comprises a second lens 122, a third lens 124, and a fourth lens 126. The second lens 122 immediately follows the first lens 120 along a propagation direction of the illumination light beam 110, the third lens 124 follows the second lens 122, and the fourth lens 126 immediately follows the third lens 124. Each of the four lenses 120, 122, 124, 126 may be arranged at a distance from the preceding lens being equal to the sum of a focal length of the preceding lens and a focal length of the following lens. The fourth lens 126 immediately precedes the entrance pupil 112 of the objective 104 and may be arranged at a distance from said entrance pupil 112 which is equal to a focal length of the fourth lens 126. A fifth beam waist 206 is formed by the optical focusing system 118 at the position of the entrance pupil 112. The optical focusing system 118 is described in more detail below with reference to Figure 2.

The optical illumination system 102 comprises a scanning element 128 configured to tilt (change the angle of) the illumination light beam 110 within the entrance pupil 112 of the objective 104. The scanning element 128 is arranged between the second lens 122 and the third lens 124 at the position of the third beam waist 204 (see also Figure 2) of the illumination light beam 110 following the second lens 122. In the present embodiment, the scanning element 128 is formed by a movable mirror 130, e.g. a galvanometer mirror. Alternatively, the scanning element 128 may be formed by any other beam deflections device, e.g. digital micromirror devices, acusto-optic deflectors.

The optical illumination system 102 further comprises a main beam splitter 132 arranged between the second lens 122 and the scanning element 128. The main beam splitter 132 is configured to separate the illumination light beam 110 and detection light 134 emitted by the specimen 106, e.g. fluorescence light. The main beam splitter 132 is further configured to direct the illumination light beam 110 onto the scanning element 128 and to direct the detection light 134 into the detection system 108.

The detection system 108 is configured to receive the detection light 134 and comprises a fifth lens 136, a pinhole aperture 138 and a detector 140. The fifth lens 136 focuses the incoming detection light 134 onto the pinhole aperture 138. The pinhole aperture 138 blocks out-of-focus light rays of the detection light 134 before the detection light 134 falls onto the detector 140.

Figure 2 shows a schematic diagram of a part of the optical focusing system 118 of the microscope 100 according to Figure 1. The part of the optical focusing system 118 shown in Figure 2 comprises the fiber end 116, the first lens 120 and the second lens 122. Further, the second beam waist 202 of the illumination light beam 110 immediately following the first lens 120 and the third beam waist 204 following the second lens 122 are shown in Figure 2.

In thin lens approximation, the radius $w_0'$ of the second beam waist 202 of the illumination light beam 110 can be expressed in terms of the radius $w_0$ of the first beam waist 200 of the illumination light beam 110, the focal length $f_1$ of the first lens 120 and the wavelength $\lambda$ of the light of the illumination light as

$$w_0' = \frac{f_1 \times \lambda}{\pi \times w_o}.$$

The radius $w_0''$ of the third beam waist 204 of the illumination light beam 110 can be expressed in terms of the radius $w_0'$ of the second beam waist 202 of the illumination light beam 110 and the focal length $f_2$ of the second lens 122 as

$$w_0'' = \frac{f_2 \times \lambda}{\pi \times w_o'} = \frac{f_2}{f_1} \times w_o.$$

The expressions above can be correspondingly applied to determine the radii of the following beam waists, i.e. the fourth beam waist 205 and the fifth beam waist 206 (and possibly further beam waists if desired). This means, after an even number of beam waists in the optical illumination system 102 (excluding the first beam waist 200), the radius of the beam waist has the same wavelength dependency as the radius of the first beam waist 200 at the fiber end 116, apart from chromatic aberrations. For an odd number of beam waists (again excluding the first beam waist 200), the wavelength dependency of the radius of the beam waist is proportional to the wavelength and indirectly proportional to the wavelength dependence of the beam waist radius at the fiber end 116. Provided that the MFD of the optical fiber 114 increases with the wavelength as explained above, the two proportionalities counteract each other so that the radius of the beam waist is essentially independent of (or at least little influenced by) the wavelength of the illumination light beam 110 after an odd number of beam waists.

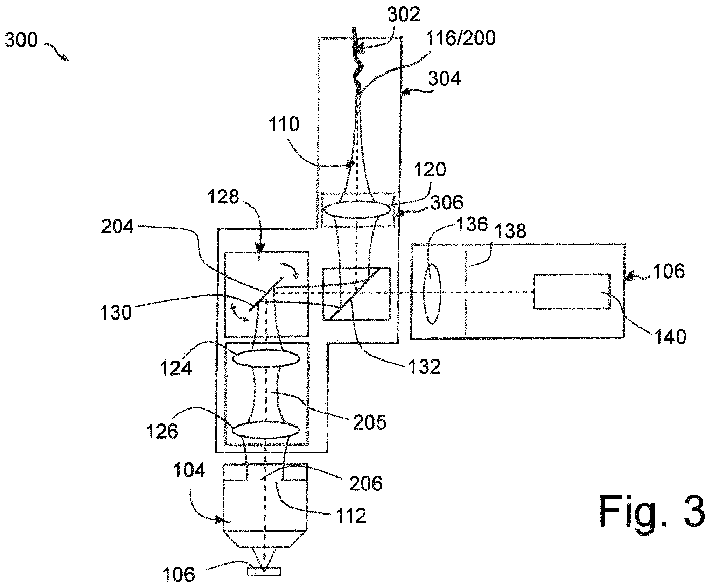

In the embodiment according to Figures 1 and 2, the four beam waists 202, 204, 205, 206 are formed which may also be referred to as four intermediate images as explained above. Thus, the radius of the fifth beam waist 206 at the entrance pupil 112 has the same wavelength dependency as the radius of the first beam waist 200 at the fiber end 116. An alternative example of the optical intermediate imaging system 118, that is not in accordance with the claimed invention, is described below with reference to Figure 3.

In another alternative example, not according to the claimed invention, the optical fiber 114 has a wavelength dependent mode field diameter, i.e. the increase of its mode field diameter with an increasing wavelength is more than 0.03 %/nm. In particular, the optical fiber 114 may be a step index fiber or a gradient index fiber. In this embodiment, the radius of the fifth beam waist 206 at the entrance pupil 112 increases as the wavelength $\lambda$ of the illumination light beam 110 increases. This overilluminates or underilluminates the entrance pupil 112 of the objective 104 dependent on the wavelength $\lambda$, thereby affecting the effective numerical aperture NA of the objective 104.

This can be used to control the lateral and axial resolution of the microscope 100. The lateral resolution $\Delta r$ can be approximated in terms of the wavelength dependent numerical aperture NA and the wavelength $\lambda$ as

$$\Delta r \approx 0.61 \frac{\lambda}{NA}$$

and the axial resolution $r_z$ can be approximated in terms of the refractive index n of the specimen as

$$r_z = \frac{2 \times n \times \lambda}{NA^2}.$$

Thus, both the lateral resolution $\Delta r$ and the axial resolution $r_z$ are essentially independent of the wavelength $\lambda$ or at least to a minor extent dependent on the wavelength $\lambda$. Since the focus volume of the microscope 100, which is proportional to the product of the lateral resolutions $\Delta r$ in both lateral directions and the axial resolution $r_z$, is also essentially independent of the wavelength $\lambda$ or at least to a minor extent dependent on the wavelength $\lambda$, the microscope 100 of the present embodiment may be used in particular for fluorescence correlation spectroscopy.

Figure 3 is a schematic drawing of a microscope 300 according to another example, not according to the claimed invention. The microscope 300 according to Figure 3 comprises an optical illumination system 304 having an optical fiber 302 having a mode field diameter which significantly increases as the wavelength of the illumination light beam 110 increases. As explained above, for the sake of simplicity, the mode field diameter of the optical fiber 302 having a significant wavelength dependence is referred to as essentially wavelength-dependent in the present application, whereas the mode field diameter of the optical fiber 114 having a relatively low wavelength dependence is referred to as essentially wavelength-independent. In particular, the optical fiber 302 may be a step index fiber or a gradient index fiber.

The optical illumination system 304 of the microscope 300 according to Figure 3 is further distinguished in that the optical focusing system 306 comprises only the lenses 120, 124, 126. Thus, compared to the embodiment of Figures 1 and 2, the lens 122 is omitted. Accordingly, in the present example, the optical focusing system 306 realizes an odd number of (correspondingly renumbered) beam waists, i.e. the beams waists 204, 205, and 206 wherein the beam waist 202 of Figures 1 and 2 is missing. The radius of the beam waist 206 at the position of the entrance pupil 112 is proportional to the wavelength of the illumination light beam 110 and indirectly proportional to the wavelength dependent radius of the first beam waist 200, i.e. at the fiber end 116. Thus, in this example, the radius of the beam waist is essentially independent of the wavelength of the illumination light beam 110.

Needless to say that the embodiment described above is to be understood merely as an example. For instance, the number of beam waists 202, 204, 205, 206 formed by the optical focusing system 118, 306 is by no means limited to three and four, respectively. Accordingly, the number of lenses 120, 122, 124, 126 is also not limited to three or four. Rather, beam waists and lenses may be provided in any suitable number. Following numerical examples may be considered.

According to a first numerical example, not according to the claimed invention, an odd number of five lenses may be included in the optical focusing system. Hereinafter, the lenses are numbered in the order as seen from the fiber end. Further, a wavelength of 500 nm and a mode field radius of 2 $\mu$m are assumed. Then, a first lens with an exemplary focal length of 4 mm forms a beam waist with a radius of 0.32 mm. A second lens with an exemplary focal length of 20 mm forms a beam waist with a radius of 10 $\mu$m. A third lens with an exemplary focal length of 80 mm forms a beam waist with a radius of 1.28 mm. A fourth lens with an exemplary focal length of 50 mm forms a beam waist of 6.2 $\mu$m. Finally, a fifth lens with an exemplary focal length of 200 mm forms a beam waist with a radius of 5.1 mm, wherein this beam waist represents the last beam waist which illuminates the entrance pupil of the objective.

According to a second numerical example, an even number of six lenses may be included in the optical focusing system. Again, the lenses are numbered in the order as seen from the fiber end, and a wavelength of 500 nm and a mode field radius of 2 $\mu$m are assumed. Then, a first lens with an exemplary focal length of 4 mm forms a beam waist with a radius of 0.32 mm. A second lens with an exemplary focal length of 200 mm forms a beam waist with a radius of 100 $\mu$m. A third lens with an exemplary focal length of 20 mm forms a beam waist with a radius of 32 $\mu$m. A fourth lens with an exemplary focal length of 250 mm forms a beam waist of 1.25 mm. A fifth lens with an exemplary focal length of 50 mm forms a beam waist with a radius of 6.4 $\mu$m. Finally, a sixth lens with an exemplary focal length of 200 mm forms a beam waist with a radius of 5 mm, wherein this beam waist represents the last beam waist which illuminates the entrance pupil of the objective.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

List of Reference Signs

| | |
|---|---|
| 100 | Microscope |
| 102 | Optical illumination system |
| 104 | Objective |
| 106 | Specimen |
| 108 | Detection system |
| 110 | Illumination light beam |
| 112 | Entrance pupil |
| 114 | Optical fiber |
| 116 | Fiber end |
| 118 | Optical focusing system |
| 120, 122, 124, 126 | Lens |
| 128 | Scanning element |
| 130 | Movable mirror |
| 132 | Main beam splitter |
| 134 | Detection light |
| 136 | Lens |
| 138 | Pinhole aperture |
| 140 | Detector |
| 200, 202, 204, 205, 206 | Beam waist |
| 300 | Microscope |
| 302 | Optical fiber |
| 304 | Optical illumination system |
| 306 | Optical focusing system |

**Claims**

1. A device comprising an optical illumination system (102), wherein the device is a microscope (100) and the optical illumination system (102) comprises:

   a light source configured to generate illumination light with at least two different wavelengths, an optical fiber (114) coupled to the light source and configured to form an illumination light beam (110) that is emitted from a fiber end (116) thereof, an objective (104) having an entrance pupil (114) which is configured to be illuminated with the illumination light beam (110) for creating a focus volume illuminating a specimen (106), and an optical focusing system (118) arranged between the fiber end (116) and
   the objective (104) and configured to illuminate the entrance pupil (114) of the objective (104) while forming a predetermined number of successive beam waists (202, 204, 205, 206) of the illumination light beam (110) along a propagation direction thereof, wherein the last beam waist (206) along the propagation direction determines the illumination of the entrance pupil (114) of the objective (104),

characterized in that an increase of a mode field diameter of the optical fiber (114) with an increase from the shortest wavelength to the longest wavelength of the illumination light beam (110) is less than 0.03 %/nm and the predetermined number of beam waists (202, 204, 205, 206) is an even number, so that the beam diameter of the illumination light beam (110) at the entrance pupil (114) of the objective (104) is proportional to the mode field diameter of the optical fiber (114).

2. The device according to claim 1, wherein the optical focusing system (118) is configured to form the last beam waist (206) of the illumination light beam (110) in the entrance pupil (114) of the objective (104).

3. The device according to claim 1 or 2, wherein the at least two different wavelengths of the illumination light are in a range from 350 nm to 1700 nm.

4. The device according to one of the preceding claims, wherein the optical focusing system (118) comprises a first lens (120) arranged at a distance from the fiber end (116), said distance being equal to a focal length of the first lens (120).

5. The device according to one of the preceding claims, wherein the optical focusing system (118) comprises a first lens (120) arranged at a distance from a first beam waist (200) of the illumination light beam (110), said distance being equal to a focal length of the first lens (120), wherein the first beam waist precedes the predetermined number of successive beam waists (202, 204, 205, 206) formed by the optical focusing system (118) along the propagation direction of the illumination light beam (110).

6. The device according to claim 4 or 5, wherein the optical focusing system (118) comprises at least two lenses (120, 122, 124, 126), one of which being the first lens (120), and wherein one of the at least two lenses (120, 122, 124, 126) immediately following a preceding lens of the at least two lenses (120, 122, 124, 126) along the propagation direction of the illumination light beam (110) is arranged at a distance from the preceding lens, said distance being equal to the sum of a focal length of the preceding lens and a focal length of the following lens.

7. The device according to one of the claims 3 to 6, wherein a lens (126) of the optical focusing system (118) immediately preceding the entrance pupil (112) of the objective (104) is arranged at a distance from the entrance pupil (112), said distance being equal to a focal length of the preceding lens (126).

8. The device according to one of the preceding claims, wherein the optical focusing system (118) comprises a scanning element (128) configured to scan the specimen (106) with the illumination light beam (110).

9. The device according to claim 8, wherein the scanning element (128) is arranged at the position of one of the predetermined number of beam waists (204) formed by the optical focusing system (118).

10. The device according to one of the claims 1 to 9, wherein the optical fiber is a photonic crystal fiber or a hollow core photonic crystal fiber.

11. The device according to one of the preceding claims comprising:
an optical detection system (108) having a detector (140) configured to receive the detection light (134).

12. The device (100) according claim 11, comprising a main beam splitter (132) configured to separate the illumination light beam (110) and the detection light (134).

13. The device (100) according to claim 11 or 12, wherein the microscope (100) is a confocal microscope.

**Patentansprüche**

1. Vorrichtung umfassend ein optisches Beleuchtungssystem (102), wobei die Vorrichtung ein Mikroskop (100) ist und das optische Beleuchtungssystem (102) umfasst:

eine Lichtquelle, ausgebildet, Beleuchtungslicht mit mindestens zwei verschiedenen Wellenlängen zu erzeugen, eine optische Faser (114), die mit der Lichtquelle gekoppelt und ausgebildet ist, einen Beleuchtungslichtstrahl (110) zu bilden, der von einem Faserende (116) derselben emittiert wird, ein Objektiv (104) aufweisend eine Eintrittspupille (114), die ausgebildet ist, mit dem Beleuchtungslichtstrahl (110) beleuchtet zu werden, um ein Fokusvolumen zu erzeugen, das eine Probe (106) beleuchtet, und

ein optisches Fokussiersystem (118), angeordnet zwischen dem Faserende (116) und dem Objektiv (104) und ausgebildet, die Eintrittspupille (114) des Objektivs (104) zu beleuchten, während es eine vorbestimmte Anzahl aufeinanderfolgender Strahltaillen (202, 204, 205, 206) des Beleuchtungslichtstrahls (110) entlang einer Ausbreitungsrichtung desselben bildet, wobei die letzte Strahltaille (206) entlang der Ausbreitungsrichtung die Beleuchtung der Eintrittspupille (114) des Objektivs (104) bestimmt,

**dadurch gekennzeichnet, dass** eine Zunahme eines Modenfelddurchmessers der optischen Faser (114) bei einer Zunahme von der kürzesten Wellenlänge zur längsten Wellenlänge des Beleuchtungslichtstrahls (110) weniger als 0,03 %/nm ist und die vorbestimmte Anzahl von Strahltaillen (202, 204, 205, 206) eine gerade Zahl ist, so dass der Strahldurchmesser des Beleuchtungslichtstrahls (110) an der Eintrittspupille (114) des Objektivs (104) proportional zu dem Modenfelddurchmesser der optischen Faser (114) ist.

2. Vorrichtung nach Anspruch 1, wobei das optische Fokussiersystem (118) ausgebildet ist, die letzte Strahltaille (206) des Beleuchtungslichtstrahls (110) in der Eintrittspupille (114) des Objektivs (104) zu bilden.

3. Vorrichtung nach Anspruch 1 oder 2, wobei die mindestens zwei verschiedenen Wellenlängen des Beleuchtungslichts in einem Bereich von 350 nm bis 1700 nm liegen.

4. Vorrichtung nach einem der vorstehenden Ansprüche, wobei das optische Fokussiersystem (118) eine erste Linse (120) umfasst, die in einem Abstand von dem Faserende (116) angeordnet ist, wobei der Abstand gleich einer Brennweite der ersten Linse (120) ist.

5. Vorrichtung nach einem der vorstehenden Ansprüche, wobei das optische Fokussiersystem (118) eine erste Linse (120) umfasst, die in einem Abstand von einer ersten Strahltaille (200) des Beleuchtungslichtstrahls (110) angeordnet ist, wobei der Abstand gleich einer Brennweite der ersten Linse (120) ist, wobei die erste Strahltaille der vorbestimmten Anzahl aufeinanderfolgender Strahltaillen (202, 204, 205, 206), die durch das optische Fokussiersystem (118) entlang der Ausbreitungsrichtung des Beleuchtungslichtstrahls (110) gebildet werden, vorausgeht.

6. Vorrichtung nach Anspruch 4 oder 5, wobei das optische Fokussiersystem (118) mindestens zwei Linsen (120, 122, 124, 126) umfasst, von denen eine die erste Linse (120) ist, und wobei eine der mindestens zwei Linsen (120, 122, 124, 126), die entlang der Ausbreitungsrichtung des Beleuchtungslichtstrahls (110) unmittelbar auf eine vorangehende Linse der mindestens zwei Linsen (120, 122, 124, 126) folgt, in einem Abstand von der vorangehenden Linse angeordnet ist, wobei der Abstand gleich der Summe einer Brennweite der vorangehenden Linse und einer Brennweite der folgenden Linse ist.

7. Vorrichtung nach einem der Ansprüche 3 bis 6, wobei eine Linse (126) des optischen Fokussiersystems (118), die der Eintrittspupille (112) des Objektivs (104) unmittelbar vorangeht, in einem Abstand von der Eintrittspupille (112) angeordnet ist, wobei der Abstand gleich einer Brennweite der vorangehenden Linse (126) ist.

8. Vorrichtung nach einem der vorstehenden Ansprüche, wobei das optische Fokussiersystem (118) ein Scanelement (128) umfasst, das ausgebildet ist, die Probe (106) mit dem Beleuchtungslichtstrahl (110) abzuscannen.

9. Vorrichtung nach Anspruch 8, wobei das Scanelement (128) an der Position einer der vorbestimmten Anzahl von Strahltaillen (204), die durch das optische Fokussiersystem (118) gebildet werden, angeordnet ist.

10. Vorrichtung nach einem der Ansprüche 1 bis 9, wobei die optische Faser eine photonische Kristallfaser oder eine Hohlkern-Photonische-Kristallfaser ist.

11. Vorrichtung nach einem der vorstehenden Ansprüche, umfassend:
ein optisches Detektionssystem (108), aufweisend einen Detektor (140), der ausgebildet ist, das Detektionslicht (134) zu empfangen.

12. Vorrichtung (100) nach Anspruch 11, umfassend einen Hauptstrahlteiler (132), der ausgebildet ist, den Beleuchtungslichtstrahl (110) und das Detektionslicht (134) zu trennen.

13. Vorrichtung (100) nach Anspruch 11 oder 12, wobei das Mikroskop (100) ein konfokales Mikroskop ist.

**Revendications**

1. Dispositif comprenant un système d'éclairage optique (102), dans lequel le dispositif est un microscope (100) et le système d'éclairage optique (102) comprend :

   une source lumineuse configurée pour générer une lumière d'éclairage avec au moins deux longueurs d'onde différentes,
   une fibre optique (114) couplée à la source lumineuse et configurée pour former un faisceau de lumière d'éclairage (110) qui est émis depuis une extrémité de la fibre (116) de celle-ci, un objectif (104) présentant une pupille d'entrée (114) qui est configurée pour être illuminée avec le faisceau de lumière d'éclairage (110) pour créer un volume focal illuminant un spécimen (106), et
   un système de focalisation optique (118) disposé entre l'extrémité de la fibre (116) et l'objectif (104) et configuré pour illuminer la pupille d'entrée (114) de l'objectif (104) tout en formant un nombre prédéterminé de cols de faisceau successifs (202, 204, 205, 206) du faisceau de lumière d'éclairage (110) le long d'une direction de propagation de celui-ci, dans lequel le dernier col de faisceau (206) le long de la direction de propagation détermine l'éclairage de la pupille d'entrée (114) de l'objectif (104),
   **caractérisé en ce qu'**une augmentation d'un diamètre de champ modal de la fibre optique (114) avec une augmentation depuis la longueur d'onde la plus courte jusqu'à la longueur d'onde la plus longue du faisceau de lumière d'éclairage (110) est inférieure à 0,03 %/nm et le nombre prédéterminé de cols de faisceau (202, 204, 205, 206) est un nombre pair, de sorte que le diamètre du faisceau du faisceau de lumière d'éclairage (110) au niveau de la pupille d'entrée (114) de l'objectif (104) est proportionnel au diamètre de champ modal de la fibre optique (114).

2. Dispositif selon la revendication 1, dans lequel le système de focalisation optique (118) est configuré pour former le dernier col de faisceau (206) du faisceau de lumière d'éclairage (110) dans la pupille d'entrée (114) de l'objectif (104).

3. Dispositif selon la revendication 1 ou la revendication 2, dans lequel les au moins deux longueurs d'onde différentes de la lumière d'éclairage se situent dans une gamme allant de 350 nm à 1 700 nm.

4. Dispositif selon l'une quelconque des revendications précédentes, dans lequel le système de focalisation optique (118) comprend une première lentille (120) disposée à une distance de l'extrémité de la fibre (116), ladite distance étant égale à une distance focale de la première lentille (120).

5. Dispositif selon l'une quelconque des revendications précédentes, dans lequel le système de focalisation optique (118) comprend une première lentille (120) disposée à une distance d'un premier col de faisceau (200) du faisceau de lumière d'éclairage (110), ladite distance étant égale à une distance focale de la première lentille (120), dans lequel le premier col de faisceau précède le nombre prédéterminé de cols de faisceau successifs (202, 204, 205, 206) formés par le système de focalisation optique (118) le long de la direction de propagation du faisceau de lumière d'éclairage (110).

6. Dispositif selon la revendication 4 ou 5, dans lequel le système de focalisation optique (118) comprend au moins deux lentilles (120, 122, 124, 126), l'une de celles-ci étant la première lentille (120), et dans lequel l'une des au moins deux lentilles (120, 122, 124, 126) suivant immédiatement une lentille précédente des au moins deux lentilles (120, 122, 124, 126) le long de la direction de propagation du faisceau de lumière d'éclairage (110) est disposée à une distance de la lentille précédente, ladite distance étant égale à la somme d'une distance focale de la lentille précédente et d'une distance focale de la lentille suivante.

7. Dispositif selon l'une des revendications 3 à 6, dans lequel une lentille (126) du système de focalisation optique (118) précédant immédiatement la pupille d'entrée (112) de l'objectif (104) est disposée à une distance de la pupille d'entrée (112), ladite distance étant égale à une distance focale de la lentille précédente (126).

8. Dispositif selon l'une quelconque des revendications précédentes, dans lequel le système de focalisation optique (118) comprend un élément de balayage (128) configuré pour balayer le spécimen (106) avec le faisceau de lumière d'éclairage (110).

9. Dispositif selon la revendication 8, dans lequel l'élément de balayage (128) est disposé à la position de l'un des cols de faisceau (204) du nombre prédéterminé de cols de faisceau formés par le système de focalisation optique (118).

**10.** Dispositif selon l'une des revendications 1 à 9, dans lequel la fibre optique est une fibre à cristal photonique ou une fibre à cristal photonique à cœur creux.

**11.** Dispositif selon l'une quelconque des revendications précédentes comprenant :
un système de détection optique (108) présentant un détecteur (140) configuré pour recevoir la lumière de détection (134).

**12.** Dispositif (100) selon la revendication 11, comprenant un séparateur de faisceau principal (132) configuré pour séparer le faisceau de lumière d'éclairage (110) et la lumière de détection (134).

**13.** Dispositif (100) selon la revendication 11 ou la revendication 12, dans lequel le microscope (100) est un microscope confocal.

Fig. 1

Fig. 2

Fig. 3

**EP 3 889 663 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20090118774 A
- EP 1126302 A2
- EP 2720074 A2